# FASCICULE DE BREVET EUROPEEN

(11) **EP 2 588 781 B1**
(45) Date de publication et mention de la délivrance du brevet: **19.10.2016**
(21) Numéro de dépôt: 11740961.5
(22) Date de dépôt: 27.06.2011
(51) Int. Cl.: F02M 26/70

(54) **VANNE DE CIRCULATION DE FLUIDE**
FLÜSSIGKEITSVENTIL
FLUID VALVE

(30) Priorité: 30.06.2010 FR 1002781
(43) Date de publication de la demande: 08.05.2013
(73) Titulaire: Valeo Systèmes de Contrôle Moteur, 95800 Cergy (FR)
(72) Inventeur: ADENOT, Sébastien, F-95300 Pontoise (FR); HODEBOURG, Grégory, F-78500 Sartrouville (FR)
(74) Mandataire: Cardon, Nicolas
(86) Numéro de dépôt international: PCT/FR2011/051489
(87) Numéro de publication internationale: WO 2012/001286

(56) Documents cités:
- DE-A1- 19 936 457
- GB-A- 2 378 233
- US-A- 4 249 555
- US-A- 4 519 579
- US-A1- 2004 004 204

## Description

La présente invention concerne une vanne de circulation de fluide. Il pourra s'agir, notamment, de gaz d'échappement d'un moteur de véhicule automobile, d'air frais destiné à l'admission du moteur ou d'un mélange d'air frais et de gaz d'échappement.

Ladite vanne pourra ainsi servir de vanne doseuse en étant positionnée le long d'une ligne d'admission d'air ou d'une la ligne de recirculation de gaz d'échappement entre l'échappement et l'admission d'un moteur.

Actuellement, il est connu des vannes comprenant un corps, définissant un conduit d'écoulement de fluide, et un volet, mobile entre une position de fermeture, empêchant la circulation du fluide dans le conduit, et une position d'ouverture, permettant circulation du fluide dans le conduit.

Une difficulté à gérer avec ce type de vanne est l'obtention d'une étanchéité satisfaisante en position de fermeture du volet. En effet, les débits de fuite tolérés peuvent être très faibles. De nombreuses solutions ont déjà été proposées.

Il est ainsi connu de réaliser, au niveau d'une paroi intérieure du conduit, des surfaces d'appui complexes pour le volet. In est aussi connu de munir le volet d'un joint d'étanchéité périphériques ou d'usiner le bord de celui-ci pour améliorer le contact avec la paroi intérieure du conduit.

Une autre difficulté concerne la puissance à appliquer au volet pour quitter sa position de fermeture. Afin de diminuer la consommation énergétique de la vanne, il faut que cette puissance reste limitée alors que les solutions mises en oeuvre pour améliorer l'étanchéité sont génératrices de frottements ayant pour conséquence une augmentation de la puissance nécessaire.

GB2378233 décrit une vanne selon le préambule de la revendication 1.

La présente invention vise à améliorer la situation et propose à cette fin une vanne de circulation de fluide comprenant un corps, définissant un conduit d'écoulement de fluide, et un volet mobile entre une position de fermeture, empêchant la circulation du fluide dans le conduit, et une position d'ouverture, permettant la circulation du fluide dans le conduit.

Selon l'invention, la vanne comprend un corps, définissant un conduit d'écoulement de fluide, et un volet mobile entre une position de fermeture, empêchant la circulation du fluide dans le conduit, et une position d'ouverture, permettant la circulation du fluide dans le conduit, la vanne comprenant un joint présentant au moins une ouverture pour le passage du fluide, ledit volet étant prévu apte à fermer la ou lesdites ouvertures du joint lorsqu'il est en position de fermeture, ledit volet étant muni d'une première et d'une deuxième aile, lesdites ailes étant prévues de part et d'autre du joint, lorsque le volet est en position de fermeture, ledit volet comprenant une zone intermédiaire, reliant ladite première et ladite deuxième aile, traversant ladite ouverture du joint, ledit joint comprenant une zone plane présentant une surface contre laquelle ladite première aile vient en appui par l'une de ses faces, prévue plane, dit face d'appui de ladite première aile, et une surface opposée contre laquelle la deuxième aile du volet vient en appui, par l'une de ses faces, prévue plane, dite face d'appui de la deuxième aile, lorsque le volet est en position de fermeture, ladite ouverture pour le passage du fluide prévue dans le joint étant positionnée au niveau de ladite zone plane, la vanne comprenant un arbre d'entraînement du volet autour d'un axe d'articulation, l'axe d'articulation étant prévu à proximité de la zone intermédiaire, et, selon la direction de l'axe d'articulation, ladite première aile présentant une dimension s'étendant de part et d'autre au-delà de la dimension selon laquelle s'étend la zone intermédiaire, au moins au niveau d'une zone de jonction entre ladite zone intermédiaire et ladite première aile, le joint étant plat sur l'ensemble de sa surface.

Selon différents mode de réalisation :
- ledit joint est fixé de façon étanche au corps de la vanne et positionné de façon transversale, notamment orthogonale, audit conduit,
- ladite surface d'appui de la première aile et ladite surface d'appui de la seconde aile du volet s'étendent selon deux plans parallèles distants l'un de l'autre,
- lesdits plans sont distants d'une dimension correspondant à l'épaisseur du joint dans ladite zone plane,
- la seconde aile du volet présente une surface opposée à sa surface d'appui, plane, et la zone intermédiaire présente un pan incliné entre la face d'appui de la première aile et ladite face opposée,
- l'axe d'articulation du volet est prévu à proximité de la zone intermédiaire du volet, et, selon la direction de l'axe d'articulation du volet, ladite première aile présente une dimension s'étendant de part et d'autre au-delà de la dimension selon laquelle s'étend la zone intermédiaire, au moins au niveau d'une zone de jonction entre ladite zone intermédiaire et ladite première aile,
- ladite ouverture du joint s'étend en vis-à-vis desdites ailes, lorsque le volet est en position de fermeture,
- le joint d'étanchéité est maintenu dans ledit corps par un manchon,
- ledit corps définit une butée pour ledit joint et ledit manchon est configuré pour maintenir ledit joint en appui contre ladite butée,
- la butée présente une surface annulaire plane, prévue dans un plan transversale, notamment orthogonale, à un axe longitudinal dudit conduit, et ledit joint présente un bord périphérique, plat, prévu en appui contre ladite surface annulaire de la butée,
- ledit corps présente un alésage cylindrique, apte à recevoir ledit manchon,
- le manchon est positionné de l'autre côté dudit joint par rapport à un axe d'articulation du volet, prévu excentré par rapport audit volet,
- le volet comprend deux bagues, aptes à recevoir ledit arbre,
- la vanne comprend au moins un pallier de guidage en rotation de l'arbre, prévu dans un logement de passage dudit arbre, ménagé dans ledit corps de la vanne, ledit pallier étant saillant à l'intérieur du conduit.

L'invention sera mieux comprise à la lumière de la description suivante qui n'est donnée qu'à titre indicatif et qui n'a pas pour but de la limiter, accompagnée des dessins joints parmi lesquels :
- la figure 1 une vue de coupe, illustrant un exemple de réalisation d'une vanne conforme à l'invention, la coupe étant effectuée selon un plan de coupe radiale,
- la figure 2 est une vue de côté illustrant de façon schématique la vanne de la figure 1,
- la figure 3 illustre en perspective le joint d'étanchéité et le volet de la vanne des figures précédentes, représentés en transparence, le volet étant en position de fermeture,
- la figure 4 reprend la figure 3, le volet étant en position d'ouverture.

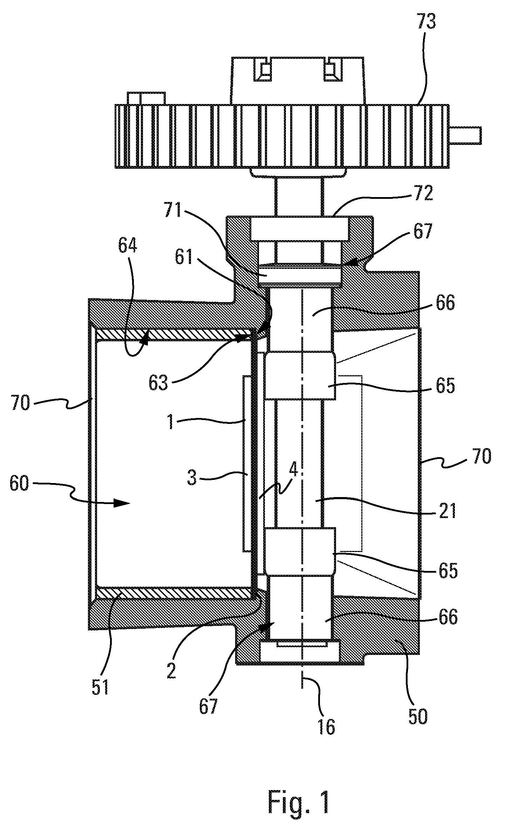

Comme illustré à la figure 1, la vanne conforme à l'invention comprend un corps 50, définissant un conduit d'écoulement de fluide 60, et un volet 1 mobile entre une position de fermeture, empêchant la circulation du fluide dans le conduit, et une position d'ouverture, permettant la circulation du fluide dans le conduit. A cette figure, le volet 1, vue de tranche, est en position de fermeture. Ladite vanne présente un premier et second orifices 70 d'entrée/sortie pour le fluide, situés de part et d'autre du conduit 60.

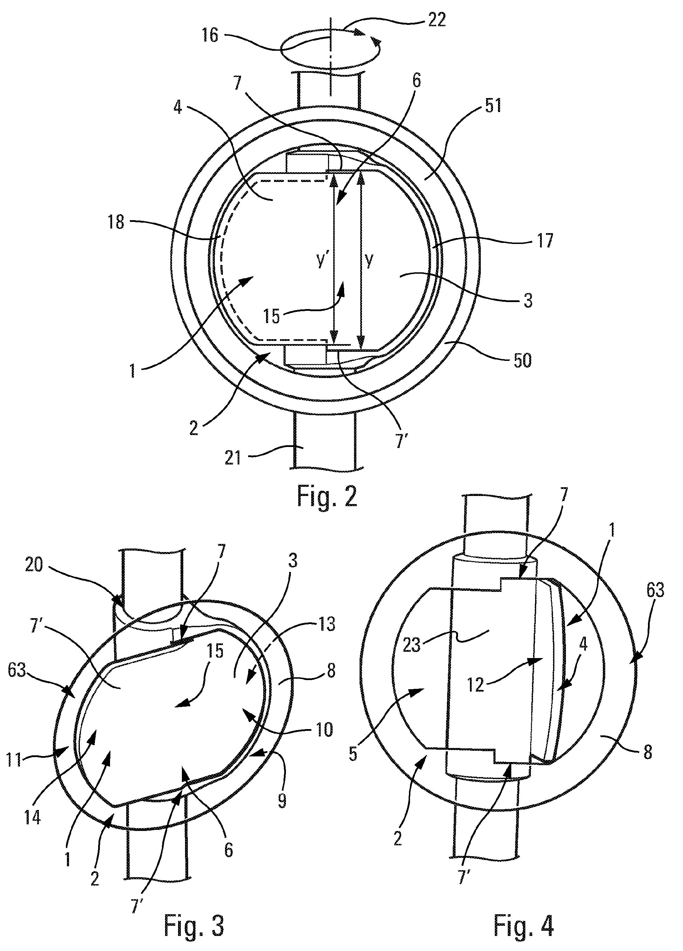

Selon l'invention, ladite vanne comprend en outre un joint 2 présentant au moins une ouverture 5 (visible à la figure 4) pour le passage du fluide et ledit volet 1 est prévu apte à fermer la ou lesdites ouvertures 5 du joint lorsqu'il est en position de fermeture.

On dispose ainsi d'une solution offrant une bonne étanchéité tout en limitant les frottements.

Ledit joint 2 est fixé, par exemple, au corps 50 de la vanne, de façon étanche. Il est positionné, notamment, de façon orthogonale audit conduit 60 et ladite ouverture 5 du joint permet le passage du fluide le long du conduit 60 en position d'ouverture du volet,

Pour cela, selon le mode de réalisation illustré, le joint d'étanchéité 2 est maintenu dans ledit corps par un manchon 51. Plus précisement, ledit corps 50 pourra définir une butée 61 pour ledit joint 2 et ledit manchon 51 est configuré pour maintenir ledit joint 2 en appui contre ladite butée 61. Autrement dit, le joint d'étanchéité 2 est pris en sandwich entre le manchon 51 et le corps 50 de la vanne.

Afin d'améliorer la qualité du contact, et son étanchéité, ladite butée 61 présente une surface annulaire plane, prévue dans un plan orthogonale à un axe longitudinal dudit conduit 60, et ledit joint 2 présente un bord périphérique 63, plat, prévu en appui contre ladite surface annulaire de la butée 61. Comme développé plus loin, ledit joint est plat sur l'ensemble de sa surface.

Ledit corps présente, par exemple, un alésage cylindrique 64, apte à recevoir ledit manchon 51, notamment par emmanchage à force, ledit alésage 64 et ledit manchon 51 étant tous les deux prévus de section circulaire correspondante.

Ledit manchon 51 s'étend, notamment, entre l'un desdits orifices d'entrée/sortie 70 et ladite butée 61 et définit une première partie du conduit d'écoulement du fluide 60. L'autre partie du conduit est, par exemple, légèrement convergent depuis l'autre orifice d'entrée/sortie 70 vers ledit joint 2.

Le manchon 51 est positionné, par exemple, de l'autre côté dudit joint 2 par rapport à un axe d'articulation 16 du volet 2, prévu excentré par rapport audit volet 2.

A ce sujet, ladite vanne comprend un arbre d'entrainement 21 du volet autour de l'axe d'articulation 16 et le volet 2 comprend deux bagues 65, recevant ledit arbre 21. Lesdites bagues 65 sont, par exemple, issues de matière du reste du volet. Elles sont, notamment, diamétralement opposées.

Ladite vanne comprend en outre, par exemple, au moins un pallier 66 de guidage en rotation de l'arbre 21, prévu dans un logement 67 de passage dudit arbre 21 ménagé dans ledit corps 50 de la vanne. Il est prévu, notamment, un dit pallier 66 de part et d'autre du volet 1. Lesdits paliers 66 pourront être saillants à l'intérieur du conduit 60, notamment afin de venir au contact desdites bagues 65.

Selon le mode de réalisation illustré, ladite vanne comprend encore un roulement à billes 71 pour l'articulation de l'arbre 21 par rapport au corps 50, un ressort de rappel 72, destiné à entraîné le volet dans une position de sécurité en cas de défaillance, et/ou une roue dentée 73, destinée à être relié à un moteur d'entrainement par l'intermédiaire d'un système à pignons, non-représentés.

Comme illustré aux figures 2 à 4, selon le mode de réalisation illustré, le volet 1 est muni d'une première 3 et d'une deuxième aile 4. Lesdites ailes 3, 4 sont prévues de part et d'autre du joint 2, lorsque le volet 1 est en position de fermeture.

Ledit volet 1 comprend également une zone intermédiaire 6, reliant ladite première 3 et ladite seconde 4 aile, traversant ladite ouverture 5 du joint, par exemple de façon affleurante, au niveau de zones 7, 7' du contour de ladite ouverture 5 du joint.

On peut ainsi obtenir une étanchéité autour de l'ouverture 5 du joint tout en autorisant le débattement du volet entre sa position d'ouverture et sa position de fermeture sans avoir à laisser des jeux importants entre l'ouverture du joint et le contour du volet.

Ladite ouverture 5 s'étend en vis-à-vis desdites ailes 3, 4, lorsque le volet est en position de fermeture, illustrée aux figures 2 et 3.

Dans une position d'ouverture du volet, illustrée à la figure 4, ladite première 3 et ladite seconde aile 4 s'étendent d'un côté et de l'autre du joint d'étanchéité 2, de façon transversale à celui-ci pour laisser passer le fluide. Le volet 1 est, par exemple, orthogonale au joint 2 dans sa positon d'ouverture maximale.

Selon les différents modes de réalisation illustrés, ledit joint 2 comprend une zone plane 8 présentant une surface 9 contre laquelle ladite première aile 3 vient en appui par l'une 10 de ses faces, prévue plane, dit face d'appui de la première aile, et/ou une surface opposée 11 contre laquelle la seconde aile 4 du volet vient en appui, par l'une 12 de ses faces, prévue plane, dite face d'appui de la seconde aile, lorsque le volet est en position de fermeture. Ladite ouverture 5 pour le passage du fluide prévue dans le joint 2 est positionnée au niveau de ladite zone plane 8. L'étanchéité est ainsi réalisée par un contact face contre face au niveau de la ou desdites ailes.

Comme déjà évoqué, ladite zone plane 8 s'étend jusqu'à la périphérie du joint. Autrement dit, le joint est entièrement plat.

Ladite surface d'appui 10 de la première aile 3 et ladite surface d'appui 12 de la seconde aile 4 du volet s'étendent, par exemple, selon deux plans parallèles distants l'un de l'autre, par exemple d'une dimension correspondant à l'épaisseur du joint dans ladite zone plane 8. On peut ainsi assurer des contacts du type plan sur plan.

La première aile 3 présente une surface 13, opposée à sa surface d'appui 10, et la seconde aile 4 présente une surface 14 opposée à sa surface d'appui 12. Ces deux faces opposées 13, 14 sont, par exemple, planes et la zone intermédiaire 6 présente un pan incliné 15 entre la face d'appui 10 de la première aile 3 et ladite face opposée 14 de la seconde aile 4. On favorise de la sorte l'écoulement du fluide à la surface du volet.

Comme déjà indiqué, la vanne pourra comprendre un axe d'articulation 16 du volet 1, prévu excentré par rapport audit volet 1 et situé, par exemple, à proximité de la zone intermédiaire 6 du volet.

Selon la direction de l'axe d'articulation du volet, ladite première aile présente une dimension y s'étendant de part et d'autre au-delà de la dimension y' selon laquelle s'étend la zone intermédiaire 6, au moins au niveau d'une zone de jonction entre ladite zone intermédiaire et ladite première aile 3. La surface d'appui 10 de la première aile 3 peut ainsi présenter une zone de contact 17, sous la forme d'une portion angulaire d'anneau, avec le joint 2, sur une première partie de la périphérie de l'ouverture 5 du joint.

Selon les modes de réalisations illustrés, la zone de contact 17 offerte par la première aile 3 s'étend aussi au droit de la zone intermédiaire 6, au niveau des zones 7, 7'. On renforce ainsi l'étanchéité et on pourrait avoir une zone intermédiaire 6 qui n'affleure pas le contour de l'ouverture 5 du joint.

L'ouverture 5 est constituée, par exemple, de deux rectangles, prévus côte à côte, l'un des deux rectangles présentant une dimension, selon l'axe d'articulation du volet, inférieure à l'autre, chacun desdits rectangles étant ici prolongés d'une portion de disque. Ladite seconde aile 4 présente une forme rectangulaire, ici prolongée d'une portion de disque, obturant la partie de l'ouverture 5 comprenant la partie rectangulaire la plus petite tandis que la première aile 3 présente une forme rectangulaire, ici prolongée d'une portion de disque, obturant la partie de l'ouverture comprenant la partie rectangulaire la plus grande. Ladite seconde aile 4 s'étend au-delà de l'ouverture 5 de façon à ce qu'une zone de contact 18 correspondante suive les bords de l'ouverture 5 du joint se trouvant le long des côtés de la partie rectangulaire la plus petite de l'ouverture 5, orientés perpendiculairement à l'axe de rotation, et le long de la partie en forme de portion de disque qui la prolonge. Ladite première aile 3 s'étend au-delà de l'ouverture 5 de façon à ce que la zone de contact 17 correspondante suive les bords de l'ouverture 5 se trouvant le long des côtés de la partie rectangulaire la plus grande de l'ouverture 5, orientés perpendiculairement à l'axe de rotation, et le long de la partie en forme de disque qui la prolonge. Ladite zone intermédiaire 6 est prévue en vis-à-vis du contour de ladite ouverture 5 sur une partie de deux des côtés opposés de la partie rectangulaire la plus grande qui la compose. Comme déjà dit, la zone de contact 17 de ladite première aile 3 se prolonge au droit de ladite partie intermédiaire 6, au niveau des zones 7, 7'.

Le volet 1 présente, par exemple, un logement 20 pour l'arbre 21 d'articulation, notamment réalisé sous la forme des bagues 65 évoquées plus haut. Il s'agit, notamment, d'une articulation en rotation autour de l'axe d'articulation 16, comme cela est illustré dans les dessins par la flèche repérée 22.

Ledit logement se trouve, par exemple, dans une extension 23 de la zone intermédiaire 6, s'étendant depuis la face opposée 13 à la face d'appui 10 de la première aile 3 et depuis la face d'appui 12 de la seconde aile 4 du volet.

Dans une variante de réalisation, correspondant aux figures 2 à 4, le logement 20 est ici traversant et l'arbre 21 débouche de part et d'autre du logement 20. L'arbre 21 est relié à l'extension 23 de façon connue en soi.

La première aile 3, la seconde aile 4, la zone intermédiaire 6 et son extension 23 forment, par exemple, une pièce unique, notamment issue de fonderie.

La première aile 3 présente, par exemple, une surface plus grande que la seconde aile 4. Elle est prévue du côté convergent du conduit 60, c'est-à-dire, du côté opposé à celui du manchon 51.

## Revendications

1. Vanne de circulation de fluide comprenant un corps (50), définissant un conduit d'écoulement de fluide (60), et un volet (1) mobile entre une position de fermeture, empêchant la circulation du fluide dans le conduit, et une position d'ouverture, permettant la circulation du fluide dans le conduit, la vanne comprenant un joint (2) présentant au moins une ouverture (5) pour le passage du fluide, ledit volet étant prévu apte à fermer la ou lesdites ouvertures (5) du joint lorsqu'il est en position de fermeture, ledit volet étant muni d'une première (3) et d'une deuxième aile (4), lesdites ailes (3, 4) étant prévues de part et d'autre du joint (2), lorsque le volet est en position de fermeture, ledit volet comprenant une zone intermédiaire (6), reliant ladite première (3) et ladite deuxième (4) aile, traversant ladite ouverture (5) du joint, ledit joint comprenant une zone plane présentant une surface contre laquelle ladite première aile vient en appui par l'une de ses faces, prévue plane, dit face d'appui de ladite première aile, et une surface opposée contre laquelle la deuxième aile du volet vient en appui, par l'une de ses faces, prévue plane, dite face d'appui de la deuxième aile, lorsque le volet est en position de fermeture, ladite ouverture pour le passage du fluide prévue dans le joint étant positionnée au niveau de ladite zone plane, la vanne comprenant un arbre d'entrainement du volet autour d'un axe d'articulation (16), l'axe d'articulation (16) étant prévu à proximité de la zone intermédiaire (6), et, selon la direction de l'axe d'articulation (16), ladite première aile (3) présentant une dimension s'étendant de part et d'autre au-delà de la dimension selon laquelle s'étend la zone intermédiaire (6), au moins au niveau d'une zone de jonction entre ladite zone intermédiaire (6) et ladite première aile (3), la vanne étant **caractérisée en ce que** le joint (2) est plat sur l'ensemble de sa surface.

2. Vanne selon la revendication 1 dans laquelle ladite ouverture (5) s'étend en vis-à-vis desdites ailes (3, 4), lorsque le volet est en position de fermeture.

3. Vanne selon l'une des revendications 1 ou 2 dans laquelle le joint d'étanchéité (2) est maintenu dans ledit corps par un manchon (51).

4. Vanne selon la revendication 3 dans laquelle ledit corps (50) définit une butée (61) pour ledit joint (2) et ledit manchon (51) est configuré pour maintenir ledit joint (2) en appui contre ladite butée (61).

5. Vanne selon la revendication 4 dans laquelle ladite butée présente une surface annulaire plane, prévue dans un plan transversale à un axe longitudinal dudit conduit (60), et ledit joint (2) présente un bord périphérique (63), plat, prévu en appui contre ladite surface annulaire (62) de la butée (61).

6. Vanne selon l'une quelconque des revendications 3 à 5 dans laquelle ledit corps présente un alésage cylindrique (64), apte à recevoir ledit manchon (51).

7. Vanne selon l'une quelconque des revendications 3 à 6 dans laquelle le manchon (51) est positionné de l'autre côté dudit joint (2) par rapport à un axe d'articulation (16) du volet (2), prévu excentré par rapport audit volet (2).

8. Vanne selon l'une quelconque des revendications précédentes comprenant un arbre d'entrainement (21) du volet autour d'un axe d'articulation (16) et dans laquelle le volet (2) comprend deux bagues (65), aptes à recevoir ledit arbre (21).

9. Vanne selon la revendication 8 comprenant au moins un pallier (66) de guidage en rotation de l'arbre (21), prévu dans un logement (67) de passage dudit arbre (21) ménagé dans ledit corps (50) de la vanne, ledit pallier (66) étant saillant à l'intérieur du conduit (60).

## Patentansprüche

1. Fluidzirkulationsventil, das einen Körper (50), der einen Fluidströmungskanal (60) definiert, und eine Klappe (1) enthält, die zwischen einer Schließstellung, die die Zirkulation des Fluids im Kanal verhindert, und einer Öffnungsstellung beweglich ist, die die Zirkulation des Fluids im Kanal erlaubt, wobei das Ventil eine Dichtung (2) enthält, die mindestens eine Öffnung (5) für den Durchlass des Fluids hat, wobei die Klappe fähig vorgesehen ist, die Öffnung(en) (5) der Dichtung zu schließen, wenn sie in der Schließstellung ist, wobei die Klappe mit einem ersten (3) und einem zweiten Flügel (4) versehen ist, wobei die Flügel (3, 4) zu beiden Seiten der Dichtung (2) vorgesehen sind, wenn die Klappe in Schließstellung ist, wobei die Klappe eine Zwischenzone (6) enthält, die den ersten (3) und den zweiten Flügel (4) verbindet, die Öffnung (5) der Dichtung durchquert, wobei die Dichtung eine ebene Zone, die eine Fläche aufweist, gegen die der erste Flügel mit einer seiner Seiten, die eben vorgesehen ist, Auflageseite des ersten Flügels genannt, in Auflage kommt, und eine gegenüberliegende Zone enthält, gegen die der zweite Flügel der Klappe mit einer seiner Seiten, die eben vorgesehen ist, Auflageseite des zweiten Flügels genannt, in Auflage kommt, wenn die Klappe in Schließstellung ist, wobei die in der Dichtung vorgesehene Öffnung für den Durchlass des Fluids im Bereich der ebenen Zone positioniert ist, wobei das Ventil eine Antriebswelle der Klappe um eine Gelenkachse (16) enthält, wobei die Gelenkachse (16) in der Nähe der Zwischenzone (6) vorgesehen ist, und gemäß der Richtung der Gelenkachse (16) der erste Flügel (3) eine Abmessung aufweist, die sich zu beiden Seiten jenseits der Abmessung erstreckt, gemäß der sich die Zwischenzone (6) erstreckt, zumindest im Bereich einer Verbindungszone zwischen der Zwischenzone (6) und dem ersten Flügel (3), wobei das Ventil **dadurch gekennzeichnet ist, dass** die Dichtung (2) über ihre ganze Fläche flach ist.

2. Ventil nach Anspruch 1, wobei die Öffnung (5) sich gegenüber den Flügeln (3, 4) erstreckt, wenn die Klappe in Schließstellung ist.

3. Ventil nach einem der Ansprüche 1 oder 2, wobei die Dichtung (2) durch eine Muffe (51) im Körper gehalten wird.

4. Ventil nach Anspruch 3, wobei der Körper (50) einen Anschlag (61) für die Dichtung (2) definiert und die Muffe (51) konfiguriert ist, die Dichtung (2) gegen den Anschlag (61) in Auflage zu halten.

5. Ventil nach Anspruch 4, wobei der Anschlag eine ebene Ringfläche aufweist, die in einer Querebene zu einer Längsachse des Kanals (60) vorgesehen ist, und die Dichtung (2) einen flachen Umfangsrand (63) aufweist, der in Auflage gegen die Ringfläche (62) des Anschlags (61) vorgesehen ist.

6. Ventil nach einem der Ansprüche 3 bis 5, wobei der Körper eine zylindrische Bohrung (64) aufweist, die die Muffe (51) aufnehmen kann.

7. Ventil nach einem der Ansprüche 3 bis 6, wobei die Muffe (51) auf der anderen Seite der Dichtung (2) bezüglich einer Gelenkachse (16) der Klappe (2) positioniert ist, die bezüglich der Klappe (2) außermittig vorgesehen ist.

8. Ventil nach einem der vorhergehenden Ansprüche, das eine Antriebswelle (21) der Klappe um eine Gelenkachse (16) enthält, und wobei die Klappe (2) zwei Ringe (65) enthält, die die Welle (21) aufnehmen können.

9. Ventil nach Anspruch 8, das mindestens ein Lager (66) zur Drehführung der Welle (21) enthält, das in einer Durchgangsaufnahme (67) der Welle (21) vorgesehen ist, die im Körper (50) des Ventils ausgespart ist, wobei das Lager (66) im Inneren des Kanals (60) vorsteht.

## Claims

1. Fluid circulation valve comprising a body (50) defining a fluid flow duct (60), and a flap (1) able to move between a closed position, preventing circulation of the fluid in the duct, and an open position, allowing the fluid to circulate in the duct, the valve comprising a seal (2) having at least one opening (5) for the passage of the fluid, said flap being designed to be able to close said opening or openings (5) in the seal when it is in the closed position, said flap being equipped with a first wing (3) and with a second wing (4), said wings (3, 4) being provided one on either side of the seal (2) when the flap is in the closed position, said flap comprising an intermediate zone (6), connecting said first wing (3) and said second wing (4), that passes through said opening (5) in the seal, said seal comprising a planar zone having a surface against which said first wing comes to bear via one of its faces, designed to be planar, referred to as the bearing face of said first wing, and an opposite surface against which the second wing of the flap comes to bear, via one of its faces, designed to be planar, referred to as the bearing face of the second wing, when the flap is in the closed position, said opening for the passage of fluid which is provided in the seal being positioned in the region of said planar zone, the valve comprising a shaft to drive the flap about an axis of articulation (16), the axis of articulation (16) being provided near the intermediate zone (6) and, in the direction of the axis of articulation (16) said first wing (3) having a dimension extending on each side beyond the dimension along which the intermediate zone (6) extends, at least at the level of a zone of connection between said intermediate zone (6) and said first wing (3), the valve being **characterized in that** the seal (2) is flat over the entirety of its surface.

2. Valve according to Claim 1, in which said opening (5) extends facing said wings (3, 4) when the flap is in the closed position.

3. Valve according to either of Claims 1 and 2, in which the seal (2) is held in said body by a sleeve (51).

4. Valve according to Claim 3, in which said body (50) defines a stop (61) for said seal (2) and said sleeve (51) is configured to hold said seal (2) pressed against said stop (61).

5. Valve according to Claim 4, in which said stop has a planar annular surface, provided in a plane transverse to a longitudinal axis of said duct (60), and said seal (2) has a flat peripheral edge (63) provided to press against said annular surface (62) of the stop (61).

6. Valve according to any one of Claims 3 to 5, in which said body has a cylindrical bore (64) able to accept said sleeve (51).

7. Valve according to any one of Claims 3 to 6, in which the sleeve (51) is positioned on the other side of said seal (2) with respect to an axis (16) of articulation of the flap (2), which axis is off-centered with respect to said flap (2).

8. Valve according to any one of the preceding claims, comprising a drive shaft (21) that drives the flap about an axis of articulation (16), and in which the flap (2) comprises two bushings (65) able to accept said shaft (21).

9. Valve according to Claim 8, comprising at least one bearing (66) guiding the rotation of the shaft (21), provided in a housing (67) for the passage of said shaft (21) which is formed in said body (50) of the valve, said bearing (66) protruding into the duct (60).
